(19) Europäisches Patentamt
European Patent Office
Office européen des brevets

(11) Veröffentlichungsnummer: **0 334 121 B1**

# (12) EUROPÄISCHE PATENTSCHRIFT

(45) Veröffentlichungstag der Patentschrift: **10.04.91 Patentblatt 91/15**

(51) Int. Cl.⁵: **C01B 21/14**, B01J 23/42

(21) Anmeldenummer: **89104267.3**

(22) Anmeldetag: **10.03.89**

## (54) Verfahren zur Herstellung von Hydroxylammoniumsalzen.

(30) Priorität: **22.03.88 DE 3809554**

(43) Veröffentlichungstag der Anmeldung: **27.09.89 Patentblatt 89/39**

(45) Bekanntmachung des Hinweises auf die Patenterteilung: **10.04.91 Patentblatt 91/15**

(84) Benannte Vertragsstaaten: **BE DE ES FR GB IT NL**

(56) Entgegenhaltungen:
**EP-A- 0 059 907**
**DE-B- 1 088 037**
**DE-C- 956 038**
**US-A- 3 060 133**

(73) Patentinhaber: **BASF Aktiengesellschaft**
**Carl-Bosch-Strasse 38**
**W-6700 Ludwigshafen (DE)**

(72) Erfinder: **Biffar, Werner, Dr.**
**Fontanesistrasse 11**
**W-6710 Frankenthal (DE)**
Erfinder: **Steigleiter, Werner**
**Im Waldhof 4**
**W-6703 Limburgerhof (DE)**
Erfinder: **Weiss, Franz-Josef, Dr.**
**Schilfweg 1**
**W-6708 Neuhofen (DE)**

EP 0 334 121 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Hydroxylammoniumsalze werden im großtechnischen Maßstab durch Reduktion von Stickstoffmonoxid mit Wasserstoff in Gegenwart von suspendierten Edelmetallkatalysatoren in wäßrigen Mineralsäuren hergestellt. Es wurden schon viele Versuche unternommen, die Aktivität der verwendeten Katalysatoren so zu beeinflußen, daß die Reduktion von Stickstoffmonoxid unter Bildung von Hydroxylammoniumsalzen verläuft und eine Reduktion zu den Nebenprodukten wie Ammoniumsalzen oder Distickstoffoxid vermindert wird.

Aus der DE-PS 956 038 ist bereits bekannt, daß man Platinkatalysatoren mit vergiftenden Mitteln wie Natriumsulfid oder Selen-, Arsen- oder Tellurverbindungen versieht, um die Bildung von Hydroxylammoniumsalzen zu bevorzugen. Auch nach dem in der DE-OS 25 00 866 beschriebenen Verfahren wurde schon versucht, die Ausbeute an Hydroxylammoniumsalzen durch Vergiftung der verwendeten Platinkatalysatoren mit Sulfiten, Dithioniten oder Thiosulfat zu verbessern. Es hat sich jedoch herausgestellt, daß die mit den einzelnen Katalysatorchargen erzielten Ergebnisse erheblich schwanken.

Wie aus der DE-PS 1 088 037 bekannt ist, wurde auch schon versucht, die Herstellung von Platinkatalysatoren durch stufenweise Reduktion von Platin(VI)-verbindungen die Vergiftung mit Natriumdithionit und anschließende Reduktion der Platin(II)-verbindungen zu metallischem Platin zu verbessern, um die Reduktion von Stickstoffmonoxid in die gewünschte Richtung zu lenken. Es hat sich jedoch herausgestellt, daß solche Katalysatoren ebenso wie die vorgenannten bei längerem Gebrauch in ihrer Aktivität vermindert werden und zur Bildung von erhöhten Mengen an Nebenprodukten Anlaß geben. Darüber hinaus konnten die unterschiedlichen Ergebnisse mit verschiedenen Katalysatorchargen nicht ausgeräumt werden.

Es war deshalb die technische Aufgabe gestellt, bei der Herstellung von Hydroxylammoniumsalzen durch katalytische Reduktion von Stickstoffmonoxid mit Wasserstoff die Katalysatoren so zu modifizieren, daß die Bildung von Nebenprodukten möglichst weitgehend unterdrückt wird, die Katalysatoren über eine längere Zeit eine hohe Aktivität aufweisen und die einzelnen Katalysatorchargen in ihrer Aktivität möglichst wenig schwanken.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren, die mit Schwefel partiell vergiftet sind, bei erhöhter Temperatur, wobei man Katalysatoren verwendet, die durch Fällen von metallischem Platin aus wäßrigen Lösungen von Platinsalzen auf darin suspendierte Träger durch Reduktionsmittel in Gegenwart von mindestens einem wasserlöslichen gegebenenfalls substituierten Thioharnstoff erhältlich sind.

Das neue Verfahren hat den Vorteil, daß die Bildung von Nebenprodukten bei der Hydroxylaminsynthese weitgehend unterbunden wird und die verwendeten Katalysatoren auch nach längerem Gebrauch gute Ergebnisse erbringen. Ferner hat das neue Verfahren den Vorteil, daß die verwendeten Katalysatorchargen eine gleichmäßigere Aktivität aufweisen.

In der Regel hält man ein Molverhältnis von Wasserstoff zu Stickstoffmonoxid von 1,5 : 1 bis 6 : 1 ein. Besonders gute Ergebnisse erhält man, wenn man darauf achtet, daß in der Reaktionszone ein Molverhältnis von Wasserstoff zu Stickstoffmonoxid von 3,5 bis 5 : 1 aufrechterhalten wird.

Vorteilhaft verwendet man als Säuren starke Mineralsäuren wie Chlorwasserstoffsäure, Salpetersäure, Schwefelsäure oder Phosphorsäure. Geeignet sind auch deren sauren Salze wie Ammoniumbisulfat. Besondere technische Bedeutung haben Schwefelsäure, Ammoniumbisulfat und Salpetersäure erlangt. In der Regel geht man von 4 bis 6 normalen wäßrigen Säuren aus und läßt im Verlauf der Reaktion die Säurekonzentration nicht unter 0,2 n fallen.

Die Umsetzung führt man vorteilhaft bei Temperaturen von 30 bis 80°C durch. Besonders bewährt haben sich Temperaturen von 35 bis 60°C. In der Regel führt man die Umsetzung bei Atmosphärendruck oder erhöhtem Druck z.B. bis zu 30 bar durch. Besonders bewährt hat sich die erfindungsgemäße Arbeitsweise, wenn man die Umsetzung unter erhöhtem Druck z.B. von 1,5 bis 20 bar durchführt.

Die Umsetzung wird in Gegenwart von Platinträgerkatalysatoren durchgeführt. Besonders bewährt haben sich Platin auf Kohleträger, z.B. Aktivkohle, insbesondere auf Graphit. Vorzugsweise hat ein solcher Trägerkatalysator einen Gehalt von 0,1 bis 5 Gew.% Platin, insbesondere von 0,2 bis 1 Gew.% Platin. Man verwendet vorteilhaft Platinträgerkatalysatoren, deren Anteile mit einer Korngröße <10 µm weniger als 10 Gew.% betragen. Vorzugsweise wird Platinträgerkatalysator mit einer Korngröße von 30 bis 90 µm verwendet. Die Feinanteile des Trägers können unschwer durch geeignete Maßnahmen, z.B. Sieben, entfernt werden.

Erfindungsgemäß werden Katalysatoren verwendet, die durch Fällen von metallischem Platin aus wäßrigen Lösungen von Platinsalzen auf darin suspendierte Träger durch Reduktionsmittel in Gegenwart von mindestens einem wasserlöslichen gegebenenfalls substituierten Thioharnstoff erhältlich sind. In der Regel geht man hierbei von wäßrigen Lösungen von Hexachloroplatinsäure oder Tetrachloroplatinsäure oder deren Salze aus. Vorteilhaft wird vor Zugabe der Thioharnstoffverbindung die Lösung auf einen pH-Wert von 2,0 bis 4,0

z.B. durch Zugabe von Alkalihydroxid oder Alkalicarbonat eingestellt. Besonders bewährt hat es sich, wenn man die Lösung auf den genannten pH-Wert puffert, z.B. durch zusätzliche Zugabe von Alkaliacetaten. Solchen Platin enthaltenden Lösungen werden mindestens ein wasserlöslicher gegebenenfalls substituierter Thioharnstoff zugesetzt. Vorteilhaft verwendet man je Grammatom Platin 0,02 bis 2 Mol, insbesondere 0,05 bis 1 Mol der genannten Thioharnstoffe.

Bevorzugte Thioharnstoffe sind solche der Formel I

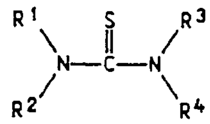

in der $R^1$, $R^2$, $R^3$ und $R^4$ gleich oder verschieden sein können und jeweils ein Wasserstoffatom oder einen niederen Alkylrest z.B. mit 1 bis 4 Kohlenstoffatomen, insbesondere mit 1 bis 2 Kohlenstoffatomen bezeichnen. Geeignete Verbindungen sind beispielsweise Thioharnstoff, N-Methylthioharnstoff, N,N'-Dimethylthioharnstoff, N-Ethylthioharnstoff, N,N'-Diethylthioharnstoff, besonders bevorzugt sind Thioharnstoffe der Formel I, von denen jeweils nur höchstens 2 Wasserstoffatome substituiert sind. Besondere technische Bedeutung hat Thioharnstoff selbst erlangt.

In der Platinsalz enthaltenden Lösung wird der anzuwendende Träger suspendiert. Das Einbringen des Trägers kann von Anfang an erfolgen oder vor dem Ausfällen des löslichen Platins mittels Reduktionsmitteln. Es hat sich als vorteilhaft erwiesen, den Träger von Anfang an in der Platin enthaltenden wäßrigen Lösung zu suspendieren. Metallisches Platin wird auf den suspendierten Träger mittels Reduktionsmitteln, die Platin bis zum metallischen Platin reduzieren, ausgefällt. Geeignete Reduktionsmittel sind beispielsweise Hydrazin, Formaldehyd oder Ameisensäure. Die Verwendung von Ameisensäure hat sich besonders bewährt. Vorteilhaft wendet man je Grammatom Platin 100 bis 1000 Mol Reduktionsmittel an. In der Regel hält man bei der Reduktion zum metallischen Platin eine Temperatur von 60 bis 90°C ein. Nach beendeter Reduktion wird der suspendierte Katalysator abfiltriert und zweckmäßig mit Wasser ausgewaschen. Die Reduktion der Platinsalzlösung zu metallischem Platin erfolgt vorteilhaft in einem einzigen Schritt.

Bei der Herstellung von Hydroxylammoniumsalzen wird der so erhältliche Platinträgerkatalysator vorteilhaft in einer Menge von 20 bis 100 g, insbesondere 30 bis 80 g/l wäßrige Mineralsäure angewandt.

Die oben beschriebene Herstellung der Platinträgerkatalysatoren läßt sich auch mit Vorteil für die Regenerierung von gebrauchten Platinträgerkatalysatoren anwenden. Hierbei wird der gebrauchte Platinträgerkatalysator mit verdünntem Königswasser z.B. für einen Zeitraum von 12 Stunden bei einer Temperatur von 60 bis 90°C behandelt. Die so erhaltene Suspension von Träger in einer Platinlösung wird dann wie vorstehend weiterverarbeitet.

Hydroxylammoniumsalze eignen sich zur Herstellung von Oximen, z.B. Cyclohexanonoxim, einem wichtigen Ausgangsstoff für Caprolactam.

Das Verfahren nach der Erfindung sei an folgenden Beispielen veranschaulicht.

Beispiel 1

50 g Graphitpulver mit einer Korngröße von 10 bis 100 µm und 0,6637 g (0,0013 gAtom) Platinchlorwasserstoffsäure werden in 43,4 ml 13,5 gew.% igem Königswasser 17 Stunden bei 80°C gerührt. Die erhaltene Suspension wird mit Natriumcarbonat bis zu einem pH-Wert von 2,75 neutralisiert und anschließend mit 2,5 g Natriumacetat gepuffert. Dann werden 21,84 mg (0,287 mMol) Thioharnstoff zugegeben und gelöst. Aus der so erhaltenen Lösung wird metallisches Platin auf den Träger gefällt durch Zugabe von 6,25 ml konzentrierter Ameisensäure bei 80°C. Die Lösung wird so lange gerührt bis kein Platin mehr nachweisbar ist. Danach wird die Lösung abfiltriert und der Katalysator neutral gewaschen.

4,8 g des so erhaltenen Katalysators (0,5 Gew.% Platin auf Graphit) werden in 120 ml 4,3 n Schwefelsäure suspendiert und bei 40°C unter Rühren (3.500 Upm) 4 Stunden 7,75 Nl pro Stunde eines Gasgemisches aus 35,0 Vol.% Stickstoffmonoxid und 65,0 Vol.% Wasserstoff eingeleitet. Die anschließende Bilanzierung der Analysendaten ergibt folgende Ergebnisse :

Raum-Zeit-Ausbeute

(NO-Umsatz (Mol) : (1 Schwefelsäure (4,3 n) × Stunde)) = 0,942

Hydroxylaminselektivität

(Mol Hydroxlamin × 100 : Mol umgesetztes NO) = 85,6%

Die Selektivität für $NH_3$ beträgt 12,5% und für Distickstoffoxid 1,9%.
Die Ergebnisse sind in der nachfolgenden Tabelle zusammengefaßt.

Beispiel 2 und 3

Die Beispiele 2 und 3 werden identisch wie Beispiel 1 durchgeführt. Die erzielten Ergebnisse sind in der Tabelle aufgeführt. Es ist ersichtlich, daß die erzielten Ergebnisse wesentlich einheitlicher sind gegenüber den in den nachfolgend aufgeführten Vergleichsbeispielen erzielten Ergebnisse.

Vergleichsbeispiel 1

50 g Graphitpulver mit einer Korngröße von 10 bis 100 µm und 0,6637 g (0,0013 gAtom) Platinchlorwasserstoffsäure werden in 43,4 ml 13,5 gew.% igem Königswasser 17 Stunden bei 80°C gerührt und dann die so erhaltene Suspension mit Natriumcarbonat auf einen pH-Wert von 2,75 eingestellt und anschließend durch Zugabe von 2,5 g Natriumacetat gepuffert. Zu dieser Lösung gibt man 1,96 ml einer Natriumdithionitlösung, die je Liter 51,5 g Natriumdithionit enthält. Nach Zugabe von 6,25 ml konzentrierter Ameisensäure wird die Suspension bei 80°C gerührt und hierbei Platin metallisch auf den Träger gefällt. Die Lösung wird so lange gerührt, bis in der Lösung kein Platin mehr nachweisbar ist. Anschließend wird der Katalysator abfiltriert und mit Wasser neutral gewaschen.

Die Hydroxylaminsynthese mit dem so hergestellten Katalysator wird analog Beispiel 1 durchgeführt. Die erzielten Ergebnisse sind aus der nachfolgenden Tabelle ersichtlich.

Vergleichsbeispiele 2 und 3

Die Vergleichsbeispiele 2 und 3 wurden identisch wie Vergleichsbeispiel 1 durchgeführt. Die erzielten Ergebnisse sind in der nachfolgenden Tabelle aufgeführt. Es ist ersichtlich, daß die Schwankungsbreite gegenüber den erfindungsgemäßen Beispielen größer ist und die erzielten Ergebnisse weniger gut sind.

Beispiel 4 (Katalysatorregenerierung)

50 g eines Katalysators (0,5 Gew.% Platin auf Graphit), der längere Zeit in der Produktion eingesetzt war und nur noch eine geringe Aktivität besaß, wurde mit 43,4 ml 13,5 gew.% igem Königswasser 17 Stunden bei 80°C gerührt. Die erhaltene Suspension wurde mit Natriumcarbonat auf einen pH-Wert von 2,75 eingestellt. Anschließend wurden 2,5 g Natriumacetat zugegeben und anschließend 23,74 mg Thioharnstoff (0,24 Mol/gAtom Pt) zugesetzt. Nach Zugabe von 6,25 ml konzentrierter Ameisensäure wurde die Suspension bei 80°C gerührt bis in der Lösung kein Platin mehr nachweisbar war und hierbei metallisches Platin auf den suspendierten Träger gefällt. Anschließend wurde der Katalysator abfiltriert und mit Wasser neutral gewaschen.

Die Hydroxylaminsynthese wird analog Beispiel 1 durchgeführt. Die erzielten Ergebnisse sind aus der Tabelle ersichtlich.

Vergleichsbeispiel 4 (Katalysatorregenerierung)

50 g eines Katalysators (0,5 Gew.% Platin auf Graphit), der längere Zeit in der Produktion eingesetzt war und nur noch eine geringe Aktivität besaß, wurde in 43,4 ml 13,5 gew.% igem Königswasser 17 Stunden bei 80°C gerührt. Die erhaltene Suspension wurde mit Natriumcarbonat auf einen pH-Wert von 2,75 eingestellt und anschließend mit 2,5 Natriumacetat gepuffert und daraufhin 1,22 ml einer Natriumdithionitlösung, die je Liter 51,5 g Natriumdithionit enthält, zugesetzt. Nach Versetzen mit 6,25 ml konzentrierter Ameisensäure wurde die Suspension bei 80°C gerührt bis in der Lösung kein Platin mehr nachweisbar war und hierbei das metallische Platin auf den Träger gefällt. Anschließend wurde der Katalysator abfiltriert und mit Wasser neutral gewaschen.

Die Hydroxylaminsynthese mit dem so erhaltenen Katalysator wird analog Beispiel 1 durchgeführt. Die

erzielten Ergebnisse sind aus der nachfolgenden Tabelle ersichtlich.

Vergleichsbeispiel 5

Der Katalysator wurde wie in Beispiel 1 hergstellt, jedoch mit dem Unterschied, daß anstatt Thioharnstoff 0,04 ml Thiophenol verwendet wurde. Die Hydroxylaminsynthese wurde analog Beispiel 1 durchgeführt. Die erzielten Ergebnisse sind aus der nachfolgenden Tabelle zu entnehmen.

Vergleichsbeispiel 6

Der Katalysator wurde wie in Beispiel 1 hergestellt, jedoch mit dem Unterschied, daß anstatt Thioharnstoff 47,6 mg Thiodiglykol verwendet wurden. Die Hydroxylaminsynthese wurde analog Beispiel 1 durchgeführt. Die erzielten Ergebnisse sind aus der nachfolgenden Tabelle zu entnehmen.

Tabelle

| Katalysator | S-Zugabe | Raum-Zeit-Ausbeute | Selektivität [%] $NH_2OH$ | $NH_3$ | $N_2O$ |
|---|---|---|---|---|---|
| Beispiel 1 | Thioharnstoff | 0,968 | 85,6 | 12,5 | 1,9 |
| Beispiel 2 | Thioharnstoff | 0,975 | 87,2 | 10,6 | 2,2 |
| Beispiel 3 | Thioharnstoff | 0,975 | 87,6 | 10,4 | 2,0 |
| Beispiel 4 (Regenerierung) | Thioharnstoff | 1,005 | 84,7 | 13,5 | 1,9 |
| Vergleichsbeispiel 1 | Na-dithionit | 0,962 | 85,5 | 12,4 | 2,1 |
| Vergleichsbeispiel 2 | Na-dithionit | 0,967 | 82,2 | 15,2 | 2,6 |
| Vergleichsbeispiel 3 | Na-dithionit | 0,960 | 88,5 | 8,9 | 2,6 |
| Vergleichsbeispiel 4 (Regenerierung) | Na-dithionit | 0,994 | 81,0 | 17,4 | 1,5 |
| Vergleichsbeispiel 5 | Thiophenol | 0,955 | 82,9 | 12,8 | 4,3 |
| Vergleichsbeispiel 6 | Thiodiglykol | 0,975 | 82,2 | 16,5 | 1,3 |

## Ansprüche

1. Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinträgerkatalysatoren, die mit Schwefel partiell vergiftet sind, bei erhöhter Temperatur, wobei man Katalysatoren verwendet, die durch Fällen von metallischem Platin aus wäßrigen Lösungen von Platinsalzen auf darin suspendierte Träger durch Reduktionsmittel in Gegenwart von mindestens einem wasserlöslichen gegebenenfalls substituierten Thioharnstoff erhältlich sind.

2. Verfahren nach Anspruch 1, dadurch gekennzeichnet, daß man Thioharnstoff der Formel I

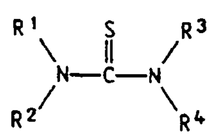

in der $R^1$, $R^2$, $R^3$ und $R^4$ jeweils gleich oder verschieden sein können und für ein Wasserstoffatom oder einen Alkylrest mit 1 bis 4 Kohlenstoffatomen stehen, verwendet.

3. Verfahren nach den Ansprüchen 1 und 2, dadurch gekennzeichnet, daß man Thioharnstoff verwendet.

4. Verfahren nach den Ansprüchen 1 bis 3, dadurch gekennzeichnet, daß man je Grammatom Platin 0,02 bis 2 Mol eines wasserlöslichen gegebenenfalls substituierten Thioharnstoffs anwendet.

## Claims

1. A process for preparing a hydroxylammonium salt by catalytic reduction of nitrogen monoxide with hydrogen at elevated temperature in a dilute aqueous mineral acid in the presence of a suspended partially sulfur-poisoned supported platinum catalyst obtainable by precipitating metallic platinum from an aqueous solution of a platinum salt onto a carrier suspended therein by means of a reducing agent in the presence of one or more water-soluble substituted or unsubstituted thioureas.

2. A process as claimed in claim 1, wherein thiourea of the formula I

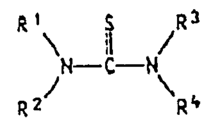

where $R^1$, $R^2$, $R^3$ and $R^4$ may be identical or different and each is hydrogen or alkyl of from 1 to 4 carbon atoms is used.

3. A process as claimed in either of claims 1 and 2, wherein thiourea is used.

4. A process as claimed in any of claims 1 to 3, wherein per gram-atom of platinum from 0.02 to 2 moles of a water-soluble substituted or unsubstituted thiourea are used.

## Revendications

1. Procédé de préparation de sels d'hydroxylammonium par réduction catalytique de monoxyde d'azote avec de l'hydrogène dans des acides minéraux aqueux dilués en présence de catalyseurs supportés de platine en suspension qui sont partiellement empoisonnés par du soufre, à température élevée, où on utilise des catalyseurs qui ont été préparés par précipitation de platine métallique à partir de solutions aqueuses de sels de platine sur un support qui y est en suspension, à l'aide d'un réducteur en présence d'au moins une thiourée hydrosuble éventuellement substituée.

2. Procédé selon la revendication 1, caractérisé en ce qu'on utilise une thiourée de formule I

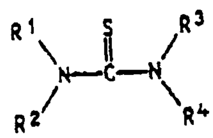

dans laquelle $R^1$, $R^2$, $R^3$ et $R^4$ peuvent être identiques ou différents et sont mis pour des atomes d'hydrogène ou des restes alkyle ayant de 1 à 4 atomes de carbone.

3. Procédé selon l'une ou l'autre des revendications 1 ou 2, caractérisé en ce qu'on utilise la thiourée.

4. Procédé selon l'une quelconque des revendications 1 à 3, caractérisé en ce qu'on emploie 0,02 à 2 moles d'une thiourée hydrosoluble éventuellement substituée par atome-gramme de platine.